# EUROPEAN PATENT APPLICATION

(11) **EP 4 759 137 A1**
(43) Date of publication of application: **17.06.2026**
(21) Application number: 25211667.8
(22) Date of filing: 28.10.2025
(51) Int. Cl.: A01K 89/01

(54) **FISHING SPINNING REEL**

(30) Priority: 10.12.2024 JP 2024215080
(71) Applicant: Globeride, Inc., Higashikurume-shi, Tokyo 203-8511 (JP)
(72) Inventor: NAGAI, Ryou, Higashikurume-shi, 203-8511 (JP); HIROSE, Kosuke, Higashikurume-shi, 203-8511 (JP)
(74) Representative: Boult Wade Tennant LLP

(57) **Abstract**

A fishing spinning reel (1) comprises a first cylindrical portion (18) in a reel main body (2) and accommodates a one-way clutch (32); a rotor (10) that comprises a second cylindrical portion (20) that rotates upon a rotation operation of a handle (3) and comprises a front wall (22), and a pair of support arms (11, 12) that face each other on both sides of the second cylindrical portion and project forward; and a spool (5) for winding a fishing line, wherein the first and second cylindrical portions are arranged concentrically in an axial direction, an inner diameter of the second cylindrical portion is larger than an outer diameter of the first cylindrical portion, at least a part of the first cylindrical portion is in an internal space of the second cylindrical portion, and a front wall through-hole (22h, 22ha) that is opened toward an outer peripheral surface of the first cylindrical portion is in the front wall of the second cylindrical portion.

## Description

### BACKGROUND OF THE INVENTION

### 1. TECHNICAL FIELD

The present invention relates to a fishing spinning reel.

### 2. DESCRIPTION OF THE RELATED ART

For example, as disclosed in JP 2020-43768 A, a fishing spinning reel has a structure including a rotor that rotates in conjunction with a handle winding rotation operation and a spool that moves forward and backward. The rotor is formed in a cylindrical shape, and a pair of support arms are formed to face each other on both sides of a reel main body side. A fishing line guide device (line roller) is provided on the distal end side of one of the pair of support arms, and when the handle is rotated, a fishing line is wound around the spool that moves forward and backward, via the fishing line guide device.

### RELEVANT REFERENCES

### LIST OF RELEVANT PATENT LITERATURE

Patent Literature 1: Japanese Patent Application Publication No. 2020-43768

### SUMMARY OF THE INVENTION

The fishing spinning reel may be washed after fishing. For example, washing is performed by discharging water from a faucet. In this case, since the reel is washed from various orientations of up, down, left, and right, water enters from between the rotor and the body, and the entering water further enters the inside of the body (that is, one-way clutch). Furthermore, in a case where dust or sand enters, it is difficult to completely discharge the dust or sand even by washing, and in a case where sufficient washing is not performed, deterioration of reel performance may occur.

An object of the present invention is to provide a fishing spinning reel that is excellent in drainage performance for discharging water, which has entered the inside of a main body, to the outside, enables sufficient washing, and does not cause deterioration of reel performance.

A fishing spinning reel according to an aspect of the present invention comprises a first cylindrical portion that is provided in a reel main body and accommodates a one-way clutch therein; a rotor that comprises a second cylindrical portion that rotates in conjunction with a rotation operation of a handle and is provided with a front wall, and a pair of support arms that face each other on both sides of the second cylindrical portion and project forward; and a spool that is moved forward and backward and around which a fishing line is wound when the rotor rotates, in which
the first cylindrical portion and the second cylindrical portion are arranged concentrically in an axial direction,
an inner diameter of the second cylindrical portion is larger than an outer diameter of the first cylindrical portion,
at least a part of the first cylindrical portion is disposed in an internal space of the second cylindrical portion, and
a front wall through-hole that is opened toward an outer peripheral surface of the first cylindrical portion is formed in the front wall of the second cylindrical portion.

With the fishing spinning reel of the present invention having the above-described configuration, since the front wall of the second cylindrical portion constituting the rotor is provided with the front wall through-hole that is opened toward the first cylindrical portion provided in the reel main body, even in a case where the reel is washed from various orientations of up, down, left, and right, washing water that has entered between the rotor and the body can be easily discharged to the outside through the front wall through-hole formed in the rotor, and retention of the washing water inside the body is suppressed.

As described above, by improving drainage performance, it is possible to suppress rusting of the one-way clutch accommodated inside the first cylindrical portion, and even in a case where dust or sand enters the inside of the body, the dust or sand can be easily discharged by washing, thereby preventing deterioration of reel performance.

### BRIEF DESCRIPTION OF THE DRAWINGS

FIG. 1 is a side view illustrating an embodiment of a fishing spinning reel;
FIG. 2 is a side view of the fishing spinning reel illustrated in FIG. 1 as viewed from the opposite side;
FIG. 3 is a view illustrating an internal structure of the fishing spinning reel;
FIG. 4 is a perspective view of a rotor portion of the fishing spinning reel as viewed from the front upper side;
FIG. 5 is an exploded perspective view illustrating a rotor and a first cylindrical portion of a reel main body;
FIG. 6 is an exploded perspective view illustrating an assembled rotor portion illustrated in FIG. 5;
FIG. 7 is a sectional view illustrating an example of a labyrinth structure;
FIG. 8 is a sectional view illustrating another example of the labyrinth structure;
FIG. 9A and 9B are views illustrating a second modification example of the rotor, FIG. 9A is a perspective view, and FIG. 9B is a front view as viewed from an axial direction;
FIG. 10A and 10B are views illustrating a third modification example of the rotor, FIG. 10A is a perspective view, and FIG. 10B is a front view as viewed from an axial direction;
FIG. 11A and 11B are views illustrating a fourth modification example of the rotor, FIG. 11A is a perspective view, and FIG. 11B is a front view as viewed from an axial direction; and
FIG. 12 is a view illustrating an internal structure of a second embodiment of the fishing spinning reel.

### DETAILED DESCRIPTION

Hereinafter, embodiments of a fishing spinning reel according to the present invention will be specifically described with reference to the accompanying drawings.

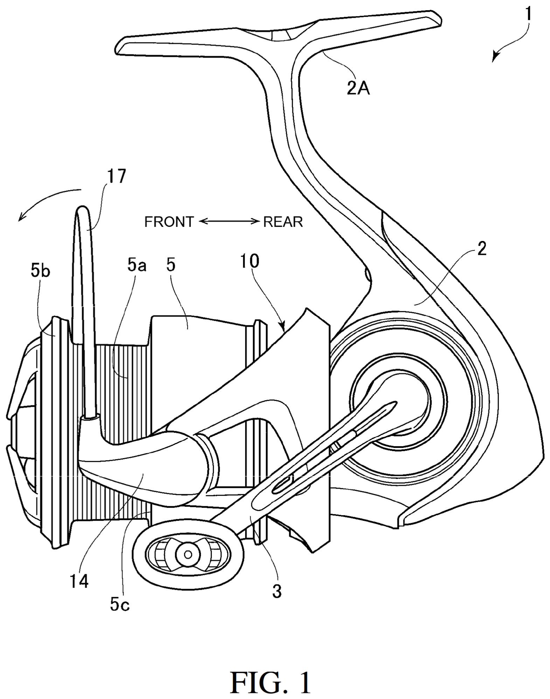

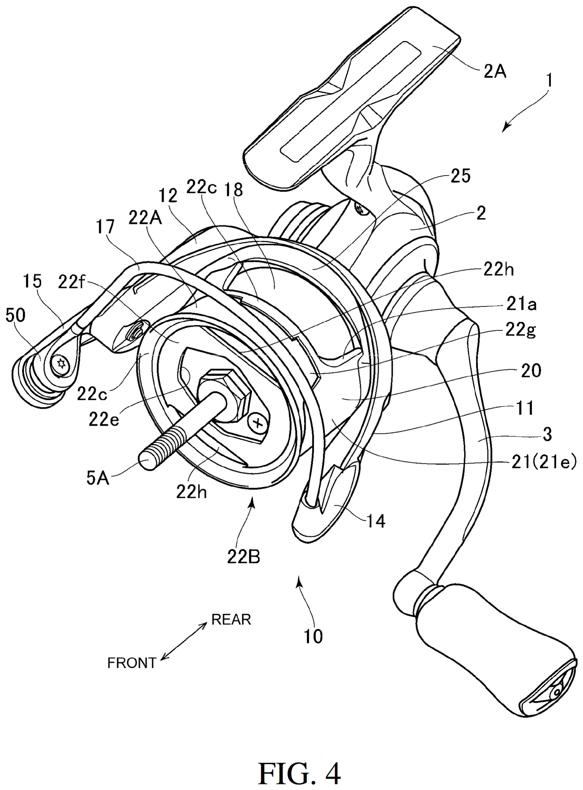

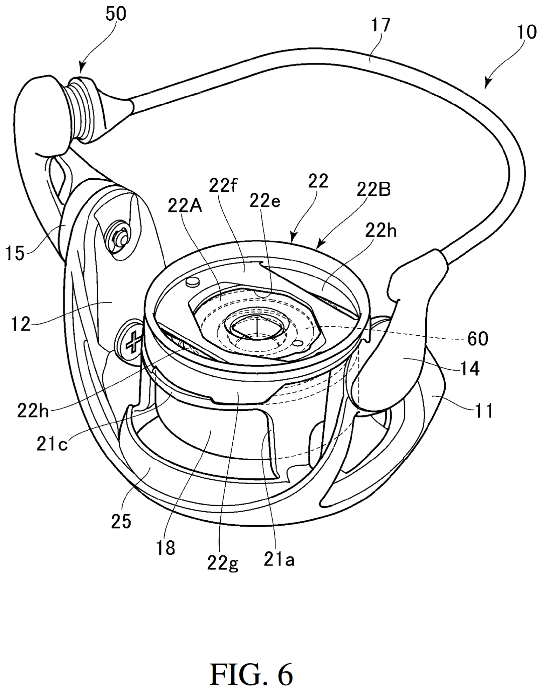

FIGS. 1 to 6 are views illustrating an embodiment of a fishing spinning reel according to the present invention. Note that, in the following description, the front (front, front side) and the rear (rear, rear side) of the fishing spinning reel indicate the directions illustrated in the drawings, in which the front corresponds to the spool side and the rear side corresponds to the reel main body side. In addition, a radial direction refers to a diameter direction when a spool shaft is viewed from the axial direction.

A leg portion 2A, which is mounted to a fishing rod, is formed on a reel main body 2 of a fishing spinning reel 1. In the reel main body 2, a handle shaft 3A is rotatably supported via a bearing, and a handle 3, which is subjected to a winding operation, is mounted to an end portion of the handle shaft 3A. In addition, the handle shaft 3A is coupled to a publicly known driving force transmission mechanism 30, a rotor 10 is driven to rotate in accordance with a rotation operation of the handle 3, and a spool 5 is moved forward and backward via a publicly known oscillating mechanism.

The spool 5 is formed of, for example, a metal having a low specific gravity, such as aluminum, an aluminum alloy, or a magnesium alloy, or a synthetic resin material, and comprises a fishing line winding barrel portion 5a around which a fishing line is wound, a front flange portion 5b and a rear flange portion (skirt portion) 5c that define, in a front-rear direction, an amount of line wound on the fishing line winding barrel portion 5a.

A pair of support arms 11 and 12 are formed on the rotor 10 to extend forward in the axial direction and face each other at an interval of approximately 180°, and the spool 5 is positioned between the pair of support arms and is reciprocally driven forward and backward. At distal end portions of the respective support arms 11 and 12, bail support members 14 and 15 are rotatably supported between a fishing line winding position and a fishing line releasing position via rotation support portions 14a and 15a. In addition, a base end portion of a semi-annular bail 17 is attached to each of the bail support members 14 and 15, and the bail 17 is rotatable together with the bail support members 14 and 15. A known fishing line guide device 50 for guiding a fishing line to the spool 5 is provided at the distal end of one of the bail support members (bail support member 15).

The rotor 10 comprises a second cylindrical portion (tubular portion) 20, and the pair of support arms 11 and 12 are formed to protrude forward via connection portions 23A and 23B that protrude radially outward from a rear portion of the second cylindrical portion 20. An arc-shaped bridge 25 protruding radially outward from an outer peripheral surface of the second cylindrical portion 20 is formed at a rear portion of the rotor 10, and a first cylindrical portion 18 provided in the reel main body 2 is disposed in an internal space of the second cylindrical portion 20. That is, the first cylindrical portion 18 and the second cylindrical portion 20 are arranged concentrically, and an inner diameter of the second cylindrical portion 20 is formed larger than an outer diameter of the first cylindrical portion 18. In addition, a gap is provided between a distal end of the first cylindrical portion 18 and a front wall 22 of the second cylindrical portion 20.

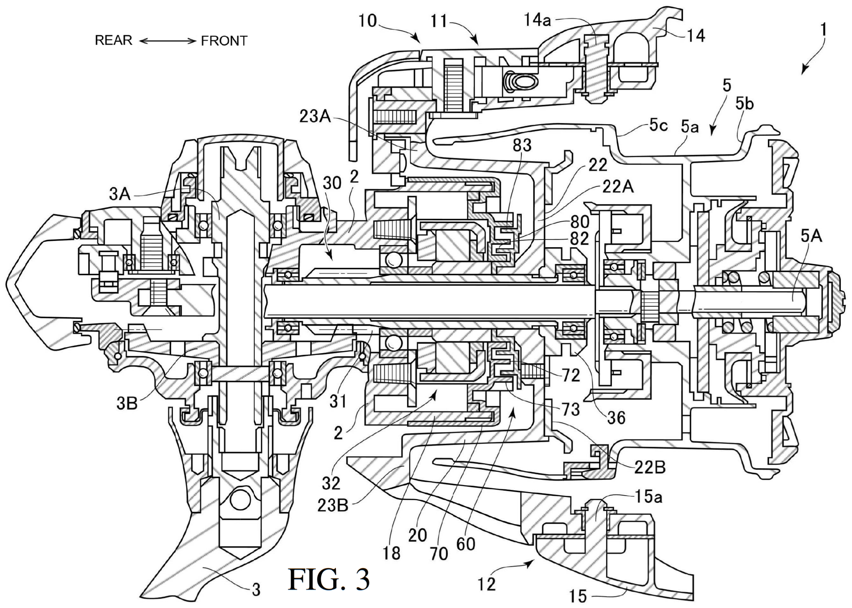

In the configuration illustrated in FIG. 3, an example is illustrated in which substantially the entirety of the first cylindrical portion 18 is disposed within the internal space of the second cylindrical portion 20, but it is sufficient that at least a part of a distal end side of the first cylindrical portion 18 is disposed inside the second cylindrical portion 20. The first cylindrical portion 18 may be formed integrally with the reel main body 2, or may be formed separately from the reel main body 2 and then integrated by adhesion, welding, or the like.

Components constituting the driving force transmission mechanism 30 are accommodated inside the first cylindrical portion 18. The accommodated components comprise a part of a pinion gear 31, which rotatably inserts a spool shaft 5A that rotatably supports the spool 5 and meshes with a face gear 3B, and a known one-way clutch 32 disposed on the outer peripheral surface side of the pinion gear 31. The one-way clutch 32 has a function (anti-reverse function) of permitting rotation of the rotor 10 in a fishing line winding direction and restricting rotation in a reverse direction, and is configured to permit rotation of the rotor 10 in the reverse direction by operating a switching lever (not illustrated).

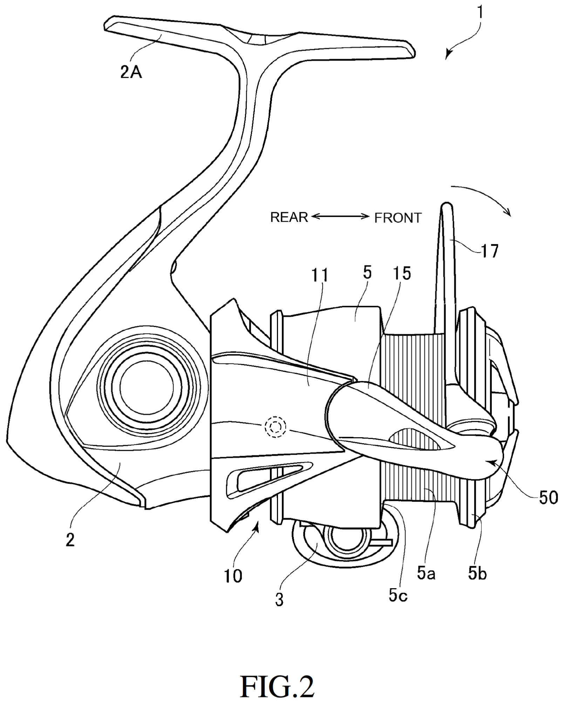

FIGS. 1 and 2 illustrate a fishing line winding state. In this state, when the rotation operation of the handle 3 is performed, the rotor 10 is rotationally driven via the driving force transmission mechanism, and the spool 5 is reciprocally driven forward and backward via the oscillating mechanism. This causes the fishing line to be evenly wound around the fishing line winding barrel portion 5a of the spool 5 via the fishing line guide device 50 of the bail support member 15 that rotates together with the rotor 10.

When the bail 17 is rotated (in an arrow direction) from the fishing line winding state illustrated in the drawing to the fishing line releasing position together with the rotation of the bail support members 14 and 15, the fishing line wound around the spool 5 is placed in a releasable state (not illustrated). Then, after the fishing line is released in this fishing line releasing state, when the bail 17 is rotated from the fishing line releasing position to the fishing line winding position, the fishing line is picked up by the bail 17, guided to the fishing line guide device 50, and brought into the fishing line winding state illustrated in FIGS. 1 and 2.

Next, a configuration of the rotor 10 will be described.

The rotor 10 is integrally formed of a lightweight and high-strength material, for example, an aluminum alloy, a magnesium alloy, or a hard resin. A pair of support arms 11 and 12 are integrally formed on the rotor 10 to protrude forward along the spool shaft 5A at an interval of approximately 180°, and the second cylindrical portion 20 is formed between the pair of support arms 11 and 12. As illustrated in FIG. 3, the second cylindrical portion 20 is integrally formed with the rotor 10.

A side wall 21 constituting the second cylindrical portion 20 is closed at a front side by the front wall 22 in a state of being partially opened, and is opened in a substantially circular shape at a rear end. In this case, a rear end of the side wall 21 is integrated with the arc-shaped bridge 25, and a rear end of the arc-shaped bridge 25 is opened in a substantially circular shape. In addition, in order to achieve weight reduction, a side wall opening portion (drainage opening) 21a is formed in the side wall 21. In this embodiment, the side wall opening portion 21a is formed in an arc shape along a circumferential direction from an upper side of the side wall 21 to a region reaching the rear end, and the side wall opening portion 21a having substantially the same shape is formed in a region other than portions (a pair of arc walls 21e) facing the pair of support arms 11 and 12. Note that lower ends of the respective arc walls 21e are connected to lower end portions of the support arms 11 and 12 via connection portions 23A and 23B, and surfaces of the respective arc walls 21e face the support arms 11 and 12 with a predetermined interval therebetween.

As described above, since the side wall opening portion 21a is largely formed by cutting away a rear end edge of the side wall 21, the portion becomes a through-hole, and the arc-shaped bridge 25 formed to protrude in the radial direction in substantially the same plane as the rear end edge of the side wall 21 is disposed at this portion. The arc-shaped bridge 25 is integrally formed with the side wall 21 and the pair of support arms 11 and 12, and is formed in an annular shape (substantially ring shape) radially outward of the side wall opening portion 21a. The arc-shaped bridge 25 constitutes the rear portion (rear end portion of the side wall 21) of the second cylindrical portion 20 of the rotor 10, and couples both side portions of the base portions of the support arms 11 and 12 to each other.

Therefore, on an inner side of the arc-shaped bridge 25 in the radial direction, the side wall opening portion 21a is positioned from the rear end edge of the side wall 21 toward the arc-shaped bridge 25. In this embodiment, the side wall opening portions 21a are formed to face each other at positions approximately 90° with respect to the respective positions where the pair of support arms 11 and 12 are formed, and are integrated with the arc-shaped bridge 25. Thus, the side wall opening portion 21a forms a large opening region (water-passing through-hole) extending from the second cylindrical portion 20 to the arc-shaped bridge 25, so that even in a case where the reel is washed with water while being oriented sideways, water passage is ensured, and the drainage performance can be improved. In addition, since the side wall opening portions 21a are formed on both sides of the arc walls 21e facing the pair of support arms 11 and 12, the rotor 10 can be reduced in weight while efficiently maintaining strength.

Note that the side wall opening portions may also be formed on the upper sides of the positions where the pair of support arms 11 and 12 are formed (positions of the connection portions 23A and 23B). In addition, it is preferable that the arc-shaped bridge 25 is integrally formed of the same material as the support arms 11 and 12.

The front wall 22 of the side wall 21 of the second cylindrical portion 20 comprises a flat bridge 22A that bridges the front end opening of the side wall 21 in the radial direction with a predetermined width. In this case, both sides of the bridge 22A may be formed to have a wide space extending to the arc-shaped bridge 25 by the side wall opening portions 21a, but in the embodiment, both sides on the upper end side of the arc wall 21e are connected by semi-annular frames 21c and 21d. That is, the bridge 22A is provided in a state of being bridged on the side wall 21 of the second cylindrical portion 20 between the pair of support arms 11 and 12, and the semi-annular frames 21c and 21d are disposed on both sides thereof to form a space portion.

In this case, by forming the side wall opening portions 21a in a large size, the rotor can be reduced in weight, but in a case where the side wall opening portions 21a are formed too widely in the circumferential direction, strength is lowered. In particular, since a large load acts on positions where the support arms 11 and 12 are formed, it is preferable that no opening portion is formed at least in an arc region of a certain range facing the support arms 11 and 12. In addition, the semi-annular frames 21c and 21d may be formed along upper end edge of the side wall 21 (arc wall 21e), but in the embodiment, the semi-annular frames 21c and 21d are formed at positions lower than the upper end edge of the side wall 21. As a result, deformation of the arc wall 21e is effectively prevented, and by engaging a cap member described below, the cap member is stabilized.

The front wall 22 of the side wall 21 of the second cylindrical portion 20 comprises a cap member (a cover member having a cap shape) 22B, which is attached to the surface of the bridge 22A and integrally formed of a synthetic resin or the like. Therefore, the front wall 22 of the side wall 21 of the second cylindrical portion 20 is constituted by the bridge 22A and the cap member 22B. Note that the front wall 22 may also be integrally formed with the rotor 10 (second cylindrical portion 20).

The bridge 22A is formed with an opening 22a at the center through which the spool shaft is inserted and in which a nut 36 for rotatably fixing the pinion gear 31, which is a component of the driving force transmission mechanism, is mounted. In addition, four holes 20b (the number is not limited and the positions are not restricted) are formed at positions corresponding to bosses 22k of the cap member 22B such that the bosses are fitted therein.

The cap member 22B comprises a circumferential wall 22c, an annular flange portion (engaging portion) 22d that protrudes radially outward at an upper opening edge of the circumferential wall to suppress line drop, and a top plate 22f formed with an insertion hole 22e in a central region through which the spool shaft 5A is inserted. The circumferential wall 22c comprises a pair of arc walls 22g that hang arcuately at two opposing positions, and a rear surface of the top plate 22f is attached in a state of facing the bridge 22A. The cap member 22B is attached to the bridge 22A by, for example, adhesion, welding, or the like by fitting the bosses 22k, which are formed to protrude at four positions, into the holes 20b.

The top plate 22f of the cap member 22B is formed with a front wall through-hole 22h that is opened toward the outer peripheral surface of the first cylindrical portion 18 provided in the reel main body 2. The front wall through-hole 22h has an opening shape formed by an arc and a straight line connecting both ends of the arc at two opposing positions of the top plate 22f, and, in a state where the cap member 22B is attached to the bridge 22A, when the front wall through-hole 22h is viewed from a front side in the axial direction, a front end region from the outer peripheral surface to the upper surface of the first cylindrical portion 18 is visible.

By providing the front wall through-hole 22h in the cap member 22B, during washing with tap water or the like, water that has entered between the first cylindrical portion 18 and the second cylindrical portion 20 can be discharged to the outside of the reel through the front wall through-hole 22h of the top plate 22f, and thus the one-way clutch 32 is less likely to be flooded.

In the embodiment, since a plurality (two) of front wall through-holes 22h is formed in the top plate 22f of the cap member 22B, and is formed at positions symmetrical (point symmetrical) with respect to the insertion hole 22e through which the spool shaft 5A is inserted, there is no reduction in rotational balance of the rotor 10.

In addition, since the front wall through-holes 22h formed at two positions are formed to extend along the radial direction between the pair of support arms 11 and 12, it is possible to efficiently suppress the reduction in rotor strength. Note that the formation position and number of the front wall through-holes 22h formed in the top plate 22f are not limited, but it is preferable to form the front wall through-holes 22h radially inward of the outer peripheral surface of the first cylindrical portion 18. By forming the front wall through-hole 22h at this position, water can easily flow along the outer periphery of the first cylindrical portion 18 (drainage performance is improved).

The front wall through-holes formed in the cap member 22B may also be formed in other portions of the cap member 22B without being limited to the top plate 22f as described above. For example, by forming the through-hole (drainage opening; not illustrated) that is opened in the radial direction on the surface of the arc wall 22g hanging arcuately, it is possible to improve the drainage performance, and to make it easier to flow water when the reel is oriented sideways.

When the cap member 22B is attached to the bridge 22A, the annular flange portion 22d is brought into contact engagement with an upper end edge of the arcuate wall 21e of the side wall 21, and the pair of arc walls 22g hanging arcuately are brought into contact with the semi-annular frames 21c and 21d, respectively, thereby closing the upper side of the side wall opening portions 21a.

With respect to the bridge 22A, the cap member 22B is mounted to the bridge 22A by bringing the top plate 22f of the cap member 22B into contact with the surface of the bridge 22A and welding the bosses 22k protruding from the holes 20b, and the front wall through-hole 22h serves as an opening for drainage.

It is preferable that, when the cap member 22B is attached to the bridge 22A, the front wall through-hole 22h is located on the front side in the axial direction relative to the side wall opening portion 21a. With this configuration, water can more easily flow from the side wall opening portion 21a to the front wall through-hole 22h. It is preferable that an upper end position of the side wall opening portion 21a is formed to be substantially flush with the front wall 22 of the second cylindrical portion. With this configuration, water is less likely to enter the one-way clutch 32 accommodated in the first cylindrical portion 18.

The arc-shaped bridge 25 connects both sides of lower ends of the arc wall 21e of the side wall 21 with a frame structure, and the connected portion defines an opening at a rear end of the second cylindrical portion 20. As a result, the main body of the rotor 10 is effectively reinforced at the pair of support arms 11 and 12, on which a large load acts, and it is possible to achieve weight reduction as much as possible while maintaining necessary strength.

With the above configuration, even when water enters the inside of the reel main body, the side wall opening portions 21a of the second cylindrical portion 20 and the front wall through-holes 22h of the front wall 22 suppress the water from entering and staying in the first cylindrical portion 18, and the fishing spinning reel with improved drainage performance is obtained. Furthermore, even when dust or sand enters the inside of the reel, the dust or sand can be easily discharged by washing, and deterioration of reel performance can also be suppressed. In the embodiment, a labyrinth structure 60 for preventing water from entering the inside of the first cylindrical portion 18 (for preventing the entering water from linearly advancing) is further provided in the first cylindrical portion 18 and the second cylindrical portion 20, thereby more reliably preventing water from entering the one-way clutch 32 accommodated in the first cylindrical portion 18.

In particular, it is preferable that the front wall through-hole 22h of the cap member 22B is formed radially outward with respect to a circumferential wall 73 serving as an entrance side that constitutes the labyrinth structure 60, and as a result, it becomes possible to more reliably prevent water from entering the one-way clutch 32.

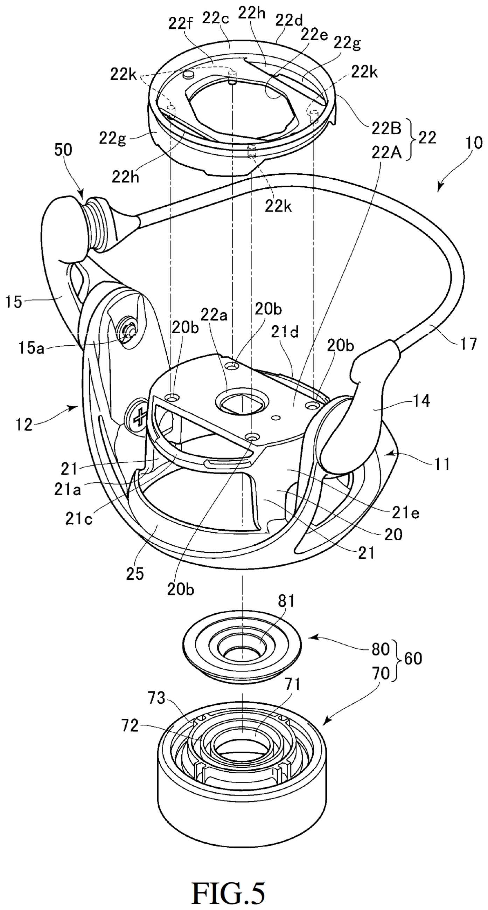

Hereinafter, with reference to FIGS. 3 and 5, the labyrinth structure 60 of the embodiment will be described in detail.

The labyrinth structure 60 of the embodiment comprises a cylindrical first mounting body 70 attached to the outer peripheral surface of the first cylindrical portion 18, and a substantially disk-shaped second mounting body 80 attached to a central region of the bridge 22A of the second cylindrical portion 20, and the first mounting body 70 and the second mounting body 80 cooperate to suppress the entry of water to the inside of the reel.

Specifically, on the front side of the first mounting body 70, a plurality of circumferential walls 72 and 73 are provided concentrically and adjacent to a central opening (constituting a circumferential wall) 71 through which the spool shaft 5A is inserted, at a predetermined interval. The first mounting body 70 is fixed, for example, by being press-fitted and adhered to the outer peripheral surface of the first cylindrical portion 18. The first mounting body 70 may be formed separately from the first cylindrical portion 18 and then integrated with the outer peripheral surface of the first cylindrical portion 18, or may be integrally formed with the first cylindrical portion 18.

On the rear side of the second mounting body 80, a plurality of circumferential walls 82 and 83 are provided concentrically and adjacent to a central opening (constituting a circumferential wall) 81 through which the spool shaft 5A is inserted, at a predetermined interval. The second mounting body 80 is fixed, for example, by being press-fitted and adhered to a central projection having a cylindrical shape formed on the rear surface of the bridge 22A.

Note that the method of attaching the first mounting body 70 and the second mounting body 80 may also employ a structure in which the first mounting body 70 and the second mounting body 80 are fixed by screwing or the like.

When the first mounting body 70 is attached to the first cylindrical portion 18 and the second mounting body 80 is attached to the rear surface of the bridge 22A, the circumferential walls 72 and 73 and the circumferential walls 82 and 83 respectively enter gaps between the opposing circumferential walls, and the circumferential walls 72, 73, 82, and 83 are brought into an adjacent state. As a result, a labyrinth structure in which an entering direction of water is bent is formed, making it difficult for water to enter gaps between the circumferential walls of the respective mounting bodies, and it is possible to suppress water from entering the inside. In this case, the number of circumferential walls to be formed is not limited; however, it is preferable to form two or more circumferential walls on each mounting body so that at least three bends are obtained.

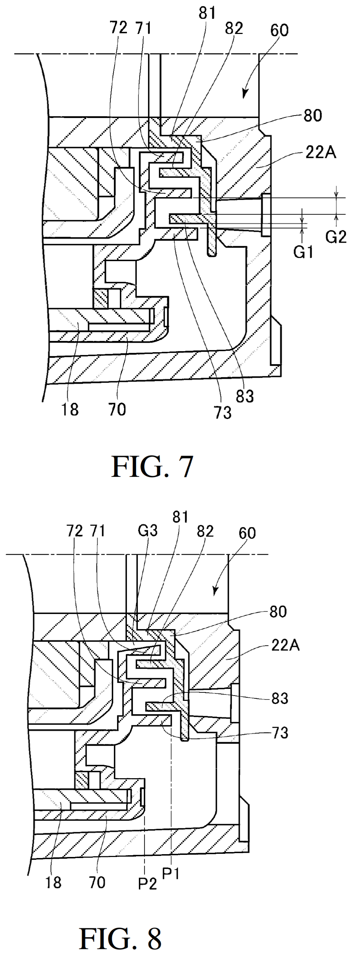

In addition, in the labyrinth structure 60 described above, it is preferable that the gaps between the circumferential walls are formed narrower on the radially outer side (the side on which water enters). That is, as illustrated in FIG. 7, it is preferable that a gap G1 between the adjacent circumferential walls 73 and 83 on the radially outer side is formed narrower than a gap G2 between the adjacent circumferential walls 72 and 83 on the radially inner side thereof (G1 < G2). With this configuration, it becomes difficult for water to enter at an entrance portion where water first enters, thereby making it possible to enhance waterproof performance. Note that the relationship of such gaps may alternatively be provided in other circumferential wall portions through which water enters in a bent manner.

In addition, as illustrated in FIG. 8, it is preferable that a gap G3 defined by the circumferential walls 71 and 81 positioned at the center among a plurality of adjacent circumferential walls constituting the labyrinth structure, is formed narrower on a side on which water enters. With this configuration, even when water enters, since wide gaps do not continue throughout the entire path, it is possible to stop the force of water entry and further enhance the waterproof performance. Note that such a gap may be configured by forming a gap between the central circumferential walls 71 and 81 narrower than gaps formed by other circumferential walls, or may be configured by forming a water entering side narrower in the middle of a water entering path.

In addition, in the labyrinth structure 60, it is preferable that a position P1 of a front end edge of the circumferential wall 73 on the radially outer side among a plurality of adjacent circumferential walls is formed on a front side in the axial direction relative to a front end position P2 of the first cylindrical portion 18. With this configuration, even when cleaning is performed with the spool shaft being oriented in a vertical direction (the reel being oriented vertically), water is easily drained radially outward, so that it is possible to improve the drainage performance without accumulating the water having entered.

The present invention can be variously modified in addition to the above-described embodiment. Hereinafter, other embodiments will be described. Note that in the embodiment described below, components similar to those of the above-described embodiment are denoted by the same reference numerals.

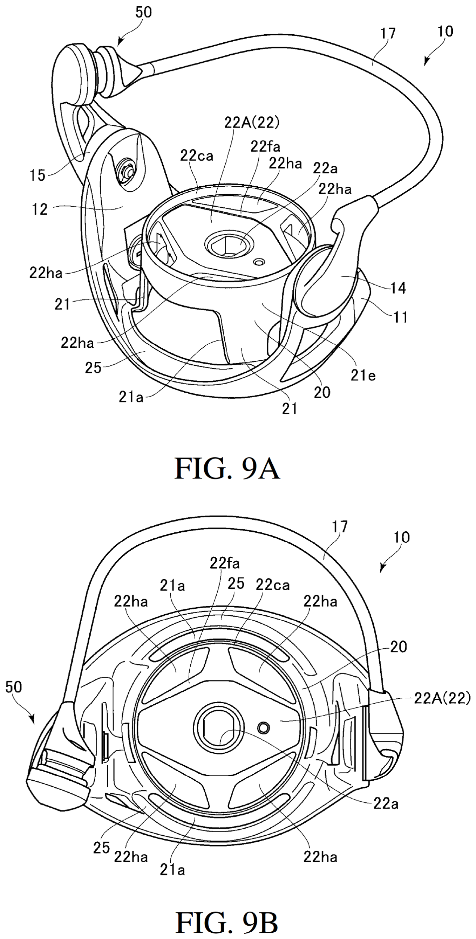

FIG. 9A and 9B are views illustrating a second modification example of the rotor, FIG. 9A is a perspective view, and FIG. 9B is a front view as viewed from the axial direction.

In this modification example, the front wall 22 is integrally formed with the second cylindrical portion 20 without providing the cap member 22B described above.

That is, the front wall 22 is constituted by the bridge 22A of the second cylindrical portion 20, and a top plate frame 22fa having a predetermined shape is formed on an inner surface of an annular wall 22ca at the front end of the second cylindrical portion 20, thereby forming a plurality (four) of front wall through-holes 22ha. It is preferable that, in the top plate frame 22fa, the plurality of front wall through-holes 22ha are formed symmetrically with respect to the central opening 22a (the insertion hole through which the spool shaft is inserted) of the bridge 22A, and in this modification example, four front wall through-holes 22ha having a substantially triangular shape are formed.

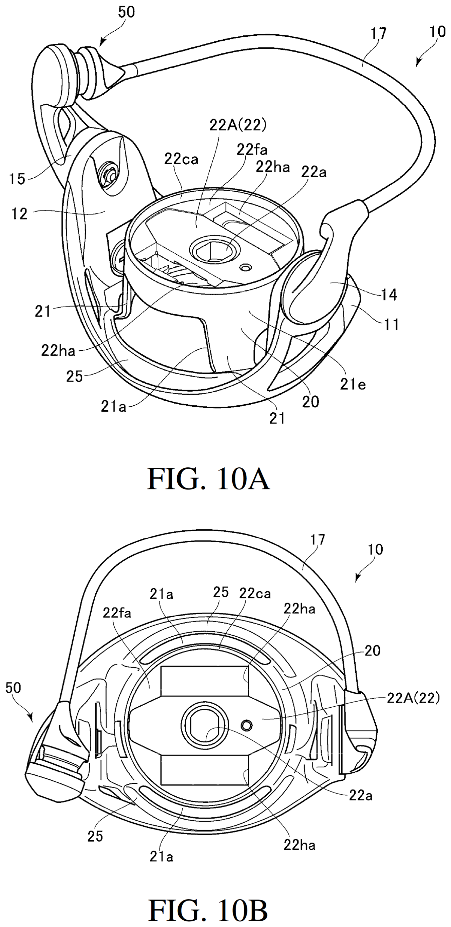

FIG. 10A and 10B are views illustrating a third modification example of the rotor, FIG. 10A is a perspective view, and FIG. 10B is a front view as viewed from the axial direction.

The front wall 22 of this modification example is integrally formed with the second cylindrical portion 20 as in the second embodiment.

In addition, two front wall through-holes 22ha having a substantially rectangular shape are formed in the top plate frame 22fa, and the front wall through-holes 22ha are formed symmetrically with respect to the central opening 22a of the bridge 22A.

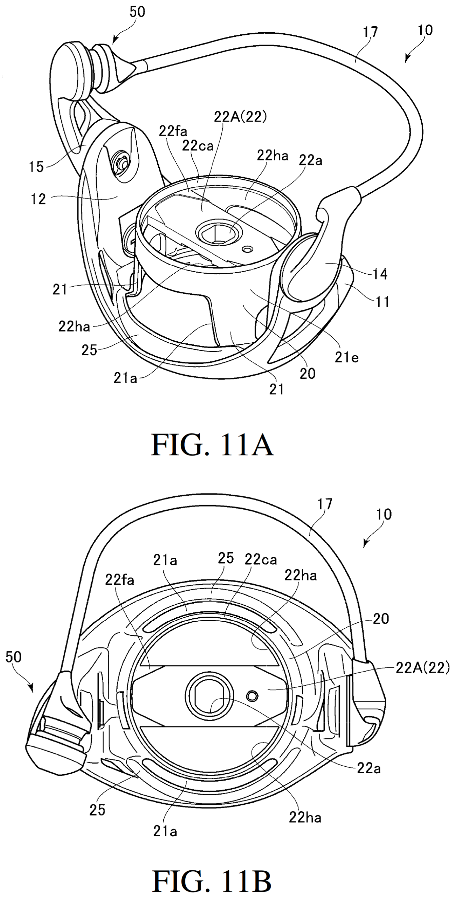

FIG. 11A and 11B are views illustrating a fourth modification example of the rotor, FIG. 11A is a perspective view, and FIG. 11B is a front view as viewed from the axial direction.

The front wall 22 of this modification example is integrally formed with the second cylindrical portion 20 as in the second and third modification examples.

In addition, two front wall through-holes 22ha having a substantially semicircular shape are formed in the top plate frame 22fa, and the front wall through-holes 22ha are formed symmetrically with respect to the central opening 22a of the bridge 22A.

As described in the second to fourth modification examples described above, the front wall 22 may have a structure without a cap member, and the shape, size, and number of the front wall through-holes can be variously modified as appropriate.

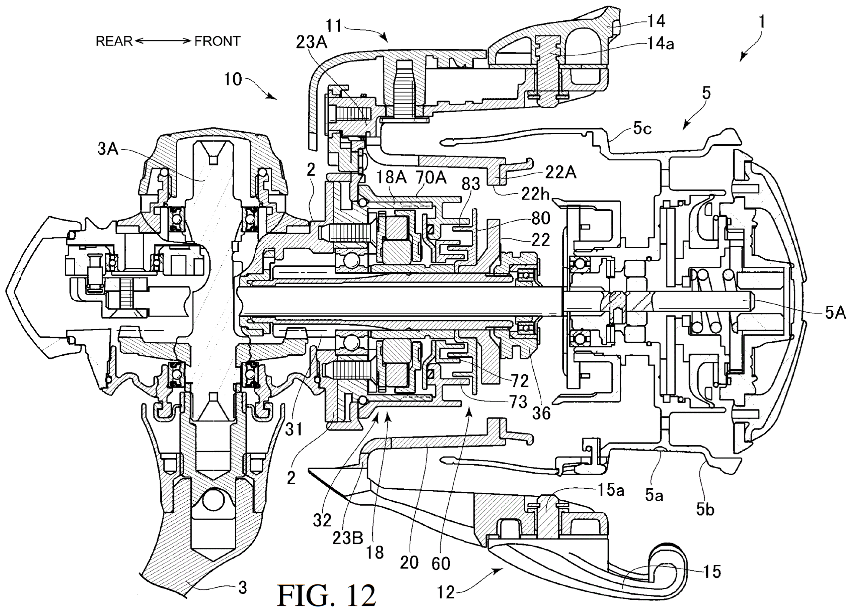

FIG. 12 is a view illustrating an internal structure of a second embodiment of the fishing spinning reel.

In the embodiment described above, the first cylindrical portion 18 only needs to accommodate the one-way clutch 32, and the accommodation mode thereof and the arrangement relationship of the labyrinth structure 60 with the first mounting body 70 can be appropriately modified.

In the embodiment illustrated in FIG. 12, the first cylindrical portion 18 is constituted by a side wall 18A that accommodates the one-way clutch 32 and a first mounting body 70A that covers an outer peripheral surface of the side wall 18A, and the first cylindrical portion 18 comprises the first mounting body 70A. In addition, the side wall 18A is formed separately from the reel main body 2, is provided in the reel main body, and accommodates the one-way clutch 32. In this case, the side wall 18A may accommodate the one-way clutch 32 over the entire circumference, or may be formed with an opening along a circumferential direction in a part of the circumference. Furthermore, the side wall 18A may be formed separately from the first mounting body 70A and attached to an inner surface (or an outer surface) of the first mounting body 70A, or may be integrally formed together with the first mounting body 70A.

The embodiments of the present invention have been described above, but the present invention is not limited to the above-described embodiments and may be modified in various ways.

For example, the shape, formation position, and number of the front wall through-holes 22h and 22ha can be appropriately modified, and the configuration of the rotor 10 and the configuration of the front wall 22 can also be appropriately modified. In addition, as long as the strength can be ensured, the shape, number, and formation position of the opening portions formed in the side wall 21 of the first cylindrical portion 18 of the rotor 10 can be appropriately modified. In addition, opening portions other than the above-described configurations may be formed as necessary.

### Reference Signs List

- 1: fishing spinning reel
- 2: reel main body
- 3: handle
- 5: spool
- 10: rotor
- 11, 12: support arm
- 14, 15: bail support member
- 18: first cylindrical portion
- 20: second cylindrical portion
- 21a: side wall opening portion
- 22: front wall
- 22h, 22ha: front wall through-hole
- 22A: bridge
- 22B: cap member
- 32: one-way clutch
- 60: labyrinth structure

## Claims

1. A fishing spinning reel comprising:
a first cylindrical portion that is provided in a reel main body and accommodates a one-way clutch therein;
a rotor that comprises a second cylindrical portion that rotates in conjunction with a rotation operation of a handle and is provided with a front wall, and a pair of support arms that face each other on both sides of the second cylindrical portion and project forward; and
a spool that is moved forward and backward and around which a fishing line is wound when the rotor rotates, wherein
the first cylindrical portion and the second cylindrical portion are arranged concentrically in an axial direction,
an inner diameter of the second cylindrical portion is larger than an outer diameter of the first cylindrical portion,
at least a part of the first cylindrical portion is disposed in an internal space of the second cylindrical portion, and
a front wall through-hole that is opened toward an outer peripheral surface of the first cylindrical portion is formed in the front wall of the second cylindrical portion.

2. The fishing spinning reel according to claim 1, wherein the front wall comprises a bridge that is bridged to a front end opening of the second cylindrical portion, and a cap member comprising a top plate at least a part of which is in surface contact with the bridge.

3. The fishing spinning reel according to claim 1, wherein the front wall through-hole is formed on an inner side of the outer peripheral surface of the first cylindrical portion in a radial direction.

4. The fishing spinning reel according to claim 1, wherein a plurality of the front wall through-holes are formed at positions symmetrical with respect to an insertion hole through which a spool shaft of the spool is inserted.

5. The fishing spinning reel according to claim 1, wherein the front wall through-hole is formed to extend in a radial direction, between the pair of support arms.

6. The fishing spinning reel according to claim 1, wherein
a side wall opening portion is formed in a side wall of the second cylindrical portion, and
the front wall through-hole is formed on a front side in the axial direction relative to the side wall opening portion.

7. The fishing spinning reel according to claim 1, wherein
a side wall opening portion is formed in a side wall of the second cylindrical portion, and
an upper end of the side wall opening portion is positioned on the same plane as the front wall of the second cylindrical portion.

8. The fishing spinning reel according to claim 1, wherein a labyrinth structure is provided between the first cylindrical portion and the second cylindrical portion.

9. The fishing spinning reel according to claim 8, wherein the front wall through-hole is formed radially outward with respect to the labyrinth structure.

10. The fishing spinning reel according to claim 8, wherein
the labyrinth structure comprises a plurality of adjacent circumferential walls,
and
a gap between the circumferential walls is formed narrower on a radially outer side.

11. The fishing spinning reel according to claim 10, wherein a gap between the circumferential walls is formed narrower on a side on which water enters from an outside.

12. The fishing spinning reel according to claim 10, wherein a gap between the circumferential walls positioned at a center among the plurality of circumferential walls is formed narrower on a side on which water enters from an outside.

13. The fishing spinning reel according to claim 10, wherein in the labyrinth structure, a position of a front end edge of the circumferential wall on a radially outer side among the plurality of adjacent circumferential walls is on a front side in the axial direction relative to a front end position of the first cylindrical portion.

14. The fishing spinning reel according to any one of claims 1 to 13, wherein base ends of the pair of support arms are coupled by a pair of arc-shaped bridges that form a rear end opening of the second cylindrical portion.
